# EUROPEAN PATENT SPECIFICATION

(11) **EP 4 158 184 B1**
(45) Date of publication and mention of the grant of the patent: **02.07.2025**
(21) Application number: 21729845.4
(22) Date of filing: 26.05.2021
(51) Int. Cl.: F03D 1/06

(54) **JOINTED WIND TURBINE BLADE WITH PRE-BEND**
GELENKIGE WINDTURBINENSCHAUFEL MIT VORBIEGUNG
PALE D'ÉOLIENNE ARTICULÉE À PRÉ-COURBURE

(30) Priority: 26.05.2020 GB 202007784
(43) Date of publication of application: 05.04.2023
(73) Proprietor: LM Wind Power A/S, 6000 Kolding (DK)
(72) Inventor: NIELSEN, Lars, 6000 Kolding (DK); JESPERSEN, Klavs, 6000 Kolding (DK)
(74) Representative: COPA Copenhagen Patents
(86) International application number: PCT/EP2021/064089
(87) International publication number: WO 2021/239830

(56) References cited:
- US-A- 4 533 297
- US-A1- 2014 334 930
- US-A1- 2020 095 977
- WATSON SIMON ET AL: "Future emerging technologies in the wind power sector: A European perspective", RENEWABLE AND SUSTAINABLE ENERGY REVIEWS, ELSEVIERS SCIENCE, NEW YORK, NY, US, vol. 113, 23 July 2019 (2019-07-23), XP085790583, ISSN: 1364-0321, [retrieved on 20190723], DOI: 10.1016/J.RSER.2019.109270

## Description

### BACKGROUND

Embodiments of the present specification generally relate to a wind turbine blade. In particular, the present specification discloses a split/jointed wind turbine blade with a pre-bend.

As will be appreciated, during operation of a wind turbine, the wind turbine blades tend to deflect towards the tower. This may in turn lead to damage to the wind turbine blade and the tower. In order to avoid collision of the wind turbine blade to the tower, it is desirable to have acceptable tower clearance. The term 'tower clearance,' as used herein, refers to a clearance provided for the wind turbine blades to rotate without striking the tower. More specifically, the term 'tower clearance' refers to a distance maintained between the tower and the rotating wind turbine blades to prevent the rotating wind turbine blades from striking the tower.

In recent times, the length of wind turbine blades has increased considerably and this increase in length of wind turbine blades contribute to increased scenarios of wind turbine blade to tower collision.

Different sensing and control techniques for managing the tower clearance have been proposed. These techniques utilize sensors disposed on the tower and/or blades to determine a distance between the rotating blades and the tower. Based on the determined distance, control strategies are used to improve the tower clearance. However, these strategies provide the clearance information only when the blades are in front of the tower, and thus may be less likely to be effective.

In addition, different design modifications to the wind turbine blade to provide better tower clearance have been proposed. This would aid having built in features in the wind turbine blade while manufacturing the wind turbine blade. In one example, the wind turbine blade is manufactured with a pre-bend to have a better tower clearance. In other example, described in US patent no. 4,533,297, a wind turbine blade is divided into two separate parts , where the coning angle of an outer blade part can be varied relative to an inner blade part. This design is not feasible in practice, in particular for very long blades. However, manufacturing and transport of the wind turbine blade with a pre-bend is challenging. Also, for a jointed blade with pre-bend there is a huge stress specifically at chord-wise joint. Hence, there lies a need to have tower clearance by using simpler techniques to create pre-bend in jointed wind turbine blades.

### BRIEF DESCRIPTION

In accordance with aspects of the present specification, a wind turbine blade is disclosed. The wind turbine blade includes a tip blade segment and a root blade segment extending in opposite directions from a chord-wise joint, where each of the tip blade segment and the root blade segment includes a pressure side shell member and a suction side shell member. Further, wind turbine blade includes a beam structure. The beam structure includes a first section, where the first section is received at a receiving section of the root blade segment and a second section disposed in the tip blade segment and extending at an angle with respect to the first section, such that at least a portion of the tip blade segment is disposed outwardly with respect to a blade axis.

In accordance with another aspect of the present specification, a method of manufacturing a wind turbine blade. The method includes arranging a tip blade segment and a root blade segment in opposite directions from a chord-wise joint, where each of the tip blade segment and the root blade segment comprises a pressure side shell member and a suction side shell member. Further, the method includes inserting a first section of a beam structure into a receiving section of the root blade segment, where a second section of a beam structure is disposed inside the tip blade segment and extending at an angle with respect to the first section, such that at least a portion of the tip blade segment is disposed outwardly with respect to a blade axis.

It is understood that the beam is utilised to connect the tip blade segment and the root blade segment such that the assembled blade comprises said two blade segments and the beam.

In a preferred embodiment, the wind turbine blade comprises a continuous shell structure, such that the wind turbine blade appears with a single continous aerodynamic profile. The shell structure comprises the pressure side shell member and the suction side shell member of the tip blade segment as well as the pressure side shell member and the suction side shell member of the root blade segment. The shell members of the tip blade segment may be directly connected to the corresponding shell members of the root blade segment, either directly or via one or more connecting shell members. Accordingly, the various shell members may abut each other at a common interface. The common interface may extend substantially in a chordwise direction of the blade. The members may also be connected via e.g. an overlamination. In general, the continuous shell structure is smooth such that the blade appears as a single assembled wind turbine blade.

According to the invention, the beam structure connects the tip blade segment and the root blade segment, such that the two parts are disposed in a fixed relative angle to each other (disregarding the deflection of the blade during operation).

In a preferred embodiment, the wind turbine blade includes one or more first joint pins located at a first end of the first section for operatively coupling with the receiving section of the root blade segment.

In yet another preferred embodiment, wind turbine blade includes one or more pin joint slots located proximate to the chord-wise joint and oriented in chord-wise direction.

In yet another preferred embodiment, the one or more pin joint slots are configured to receive corresponding second joint pins.

In yet another preferred embodiment, the first and second joint pins include a bolt, a pin, a bush, or combinations thereof.

It is clear that the one or more first and second pin joints are internal joints.

In yet another preferred embodiment, the at least a portion of the tip blade segment is disposed outwardly in a curved manner with respect to a blade axis.

In yet another preferred embodiment, the wind turbine blade is coupled to a hub, extending outwards from the hub and then extending outwardly with respect to the blade axis in a curved manner.

In yet another preferred embodiment, the beam structure is made of composite material.

In yet another preferred embodiment, the beam structure is manufactured using additive manufacturing technique.

In yet another preferred embodiment, the composite material comprises at least one of carbon fibre, aramid fibre, and fibreglass.

In yet another preferred embodiment, the wind turbine blade includes an internal support structure, wherein the beam structure forms a portion of the internal support structure.

In a preferred embodiment, the wind turbine includes a hub and at least one wind turbine blade, where the at least one wind turbine blade is coupled to a hub, extending outwards from the hub and then extending outwardly with respect to the blade axis in a curved manner.

In yet another preferred embodiment, the method includes operatively coupling first end of the first section with the receiving section of the root blade segment using one or more first joint pins.

In a preferred embodiment, the angle between the first section and the second section is 1-15 degrees, more preferably 1-10 degrees, and even more preferably 1-5 degrees.

### DRAWINGS

These and other features, aspects, and advantages of the present disclosure will become better understood when the following detailed description is read with reference to the accompanying drawings in which like characters represent like parts throughout the drawings, wherein:
FIG. 1 illustrates a diagrammatical representation of a wind turbine;
FIG. 2 is a diagrammatical representation of a wind turbine blade for use in FIG. 1; and
FIG. 3 is a detailed diagrammatical representation of at least a portion of the wind turbine blade of FIG. 2.

### DETAILED DESCRIPTION

Unless defined otherwise, technical and scientific terms used herein have the same meaning as is commonly understood by one of ordinary skill in the art to which this specification belongs. The terms "first", "second", and the like, as used herein do not denote any order, quantity, or importance, but rather are used to distinguish one element from another. Also, the terms "a" and "an" do not denote a limitation of quantity, but rather denote the presence of at least one of the referenced items. The use of "including," "comprising" or "having" and variations thereof herein are meant to encompass the items listed thereafter and equivalents thereof as well as additional items. The terms "connected" and "coupled" are not restricted to physical or mechanical connections or couplings, and can include electrical connections or couplings, whether direct or indirect. Furthermore, terms "circuit" and "circuitry" and "controlling unit" may include either a single component or a plurality of components, which are active and/or passive and are connected or otherwise coupled together to provide the described function. In addition, the term operatively coupled as used herein includes wired coupling, wireless coupling, electrical coupling, magnetic coupling, radio communication, software-based communication, or combinations thereof.

As will be described in detail hereinafter, various embodiments of a wind turbine blade and a method of manufacturing a wind turbine blade are disclosed. Specifically, a jointed wind turbine blade with a pre-bend is disclosed. More specifically, a jointed wind turbine blade with a pre-bend formed by having a section of a beam structure of the jointed wind turbine blade at an angle with respect to other section of the beam structure of the jointed wind turbine blade is presented. As will be appreciated, typically the pre-bend in the wind turbine blade is created by manufacturing the wind turbine blade shell with an inbuilt pre-bend. In order to manufacture the wind turbine blade shell with a pre-bend, the mould employed needs to have the desired pre-bend. The process of resin infusion is challenging when a mould having a pre-bend is employed. As will be appreciated, this shape of the mould contributes to hydrostatic pressure, which in turn is detrimental to the resin infusion process and laminate control.

In order to avoid issues with respect to the pre-bend, the present specification discloses use of an angled beam structure to create a pre-bend, without employing a wind turbine blade shell having a pre-bend. In other words, the use of angled beam structure aids in avoiding creation of pre-bend in the wind turbine blade shells. Accordingly, the angled beam structure may aid in creating a pre-bend for the wind turbine blade. Specifically, the angled beam structure aids in moving the wind turbine blade outwardly and away from the wind turbine tower. Accordingly, the tower clearance of a desired value is maintained thereby avoiding collision of the wind turbine blade with the wind turbine tower. Although the present specification describes one embodiment of pre-bending the wind turbine blade, other embodiments of pre-bending the wind turbine blade by using different geometries of the beam structure is also anticipated.

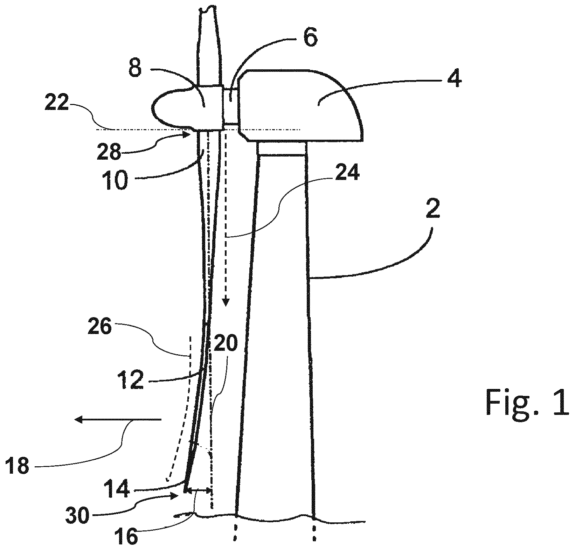

FIG. 1 illustrates a diagrammatical representation of a wind turbine. The wind turbine as represented in FIG. 1 includes a wind turbine tower 2, a nacelle 4 and a main shaft 6 with a hub 8 for wind turbine blades 10. As will be appreciated, when subjected to wind pressure the wind turbine blades 10 bend backwards and herewith inwards towards the tower 2.

In accordance with aspects of the present specification, the wind turbine blade 10 is designed in such a manner that the wind turbine blade is bent away from the tower 2. Specifically, the wind turbine blades 10 coupled to the hub 8, have an outwardly directed curvature towards an outward direction 18. More specifically, tip blade segment 12 of the wind turbine blades 10 have an outwardly directed curvature towards a direction 18. More specifically, the wind turbine blades 10 extend outwards, in a direction 24, from the hub 8 and then extend outwardly, in the direction 18, with respect to a blade axis 20 in a curved manner, as represented by reference numeral 26. It may be noted that when the blades 10 are at rest, the blades 10 may stand at a distance 16 from the blade axis 20. The blade axis 20 is an axis drawn along the length of the wind turbine blade 10 from root end 28 of the blade to tip end 30 of the blade and perpendicular to root plane 22. In one example, the blade axis 20 passes through a centre point on the root plane 22. According to aspects of the present specification, during strong winds, the wind turbine blades 10 may bend towards the tower 2, however, the wind turbine blades 10 may still be at a safe distance from the tower 2. While the blades 10 are depicted as extending substantially radially from the hub 8, it is understood that the rotor often is slightly coned, such that the blades 10 are angled slightly forward from the hub. Further, it is appreciated that the rotor may also be slightly tilted, such that the blades 10, when facing downwards are further angled away from the tower 2.

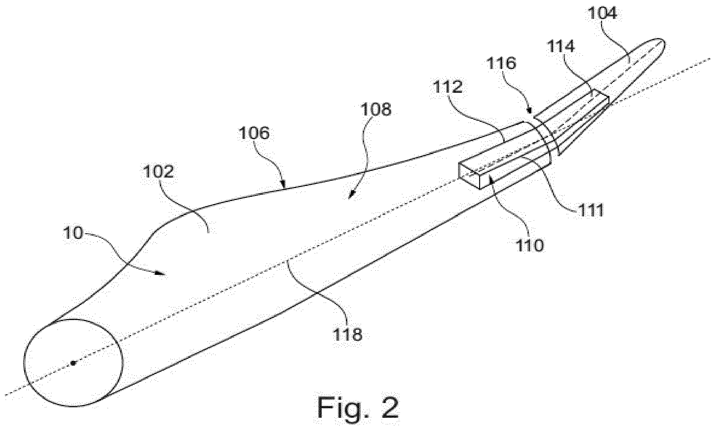

FIG. 2 is a diagrammatical representation of a wind turbine blade for use in FIG. 1. The wind turbine blade 10 includes a root blade segment 102 and a tip blade segment 104. The root blade segment 102 is nearer to the root end of the wind turbine blade 10 and includes the root end of the wind turbine blade 10. Further, the tip blade segment 104 is nearer to the tip end of the wind turbine blade 10 and includes the tip end of the wind turbine blade 10. The root blade segment 102 and the tip blade segment 104 extend in opposite directions from a chord-wise joint 112. Each of the tip blade segment 104 and the root blade segment 102 includes pressure side shell member 106, a suction side shell member 108 and an internal support structure 110. Furthermore, the wind turbine blade 10 includes a beam structure 111. The beam structure 111 may form a portion of the internal support structure 110.

The beam structure 111 is an angled structure. The beam structure 111 includes a first section 112 and a second section 114. The first section 112 is received at a receiving section of the root blade segment 102. The second section 114 is disposed inside the tip blade segment 104. The second section 114 extends at an angle with respect to the first section 112. In one example, the second section 114 is at an angle with respect to the blade axis 118. As a result, the tip blade segment 104 is disposed outwardly with respect to the blade axis 118. Accordingly, the tip blade segment 104 of the wind turbine blade 10 may be disposed outwardly, away from the tower 2. Specifically, the tip blade segment 104 of the wind turbine blade 10 may extend outwardly with respect to the blade axis 118 in a curved manner.

Additionally, the beam structure 111 is made of composite material. The composite material may include at least one of carbon fibre, aramid fibre, and fibreglass. In one embodiment, the beam structure 111 may be formed using additive manufacturing technique/Three-Dimensional (3D) printing technique. As will be appreciated, 3D printing technique builds a three-dimensional object from a computer-aided design (CAD) model, usually by successively adding material layer by layer. The 3D printing technique may also be alternatively referred to as additive manufacturing technique. The beam structure 111 may form a part of the internal support structure 100 for the wind turbine blade 10. In one embodiment, the internal support structure 100 may also include a shear web (not shown in FIG. 2) connected with a suction side spar cap (not shown in FIG. 2) and a pressure side spar cap (not shown in FIG. 2). The term 'internal support structure' as used herein refers to a structure disposed internal to the wind blade which provides support to the wind blade to effectively withstand loads/stress/strain/torsion.

In accordance with aspects of the present specification, the location where the tip blade segment 104 joins the root blade segment 104 is referred to as a chord-wise joint 116. In one embodiment, the root blade segment 102 to tip blade segment 104 ratio may be about 65-90% of total length of the wind turbine blade 10. In another embodiment, the root blade segment 102 to tip blade segment 104 ratio may be about 70-80% of total length of the wind turbine blade 10.

In the example of FIG. 2, the wind turbine blade 10 is a jointed wind turbine blade, where the root blade segment 102 and the tip blade segment 104 are separate sections. Once the first section 112 is received at the receiving section of the root blade segment 102, the tip blade segment 104 and the root blade segment 102 are coupled to one another. In addition, glue or laminate may be employed to securely couple the root blade segment 102 to the tip blade segment 104. Accordingly, an entirely assembled wind turbine blade 10 is achieved. Once the tip blade segment 104 and the root blade segment 102 are assembled to form the wind turbine blade 10, this wind turbine blade 10 may be installed on the tower 2. In one embodiment, if there is a damage in the tip blade segment 104, the tip blade segment 104 may be replaced.

During transportation, in one example, the root blade segment 102 and the tip blade segment 104 may be transported separately. Accordingly, transport of the wind turbine blade 10 may be relatively easier. It may be noted that in one example, while transporting the tip blade segment 104, the first section 112 of the beam structure 111 extends from the tip blade segment 104.

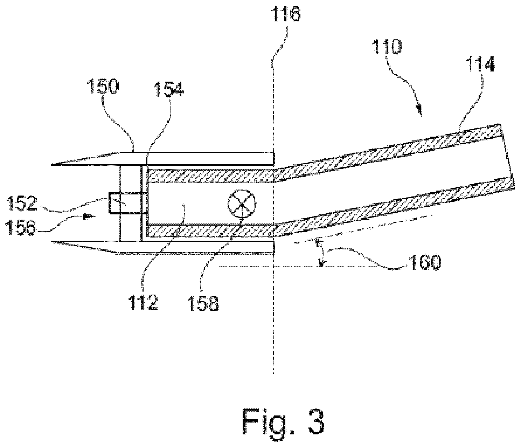

The pressure side shell members 106 and suction side shell members 108 of the tip blade segment 104 and the root blade segment 102 may be directly connected, e.g. via gluing or the like, to each other in order to form a continuous aerodynamic shell structure. Alternatively, they may be connected via one or more intermediate shell members (not shown) to form the continuous aerodynamic shell structure. The various shell members may also be connected to each other via overlaminations. Now referring to FIG. 3, a detailed diagrammatical representation of at least a portion of the wind turbine blade of FIG. 2 is represented. Specifically, FIG. 3 depicts the beam structure 111 of the wind turbine blade of FIG. 2 and the coupling of the beam structure 111. The beam structure 111 includes a first section 112 and a second section 114. The first section 112 is received in a receiving section 150. The receiving section 150 is disposed internally in the root blade segment 102.

Further, the first section 112 extends from the second section 114. The second section 114 is at an angle with respect to the first section 112. The angle is represented by reference numeral 160. In a preferred embodiment, the angle 160 is an acute angle. The angle 160 is in such a manner that the second section is away from the tower when the wind blade is installed. The second section 114 is disposed internal to the tip blade segment 104. The angle 160 may preferably be 1-15 degrees, more preferably 1-10 degrees, and even more preferably 1-5 degrees.

Further, a first joint pin 152 is located at a first end 154 of the first section 112 for operatively coupling with the receiving section 150 of the root blade segment 102. The receiving section 150 includes an aperture 156. The first joint pin 152 is securely received in the aperture 156. This would in turn aid is securely coupling the tip blade segment 104 to the root blade segment 102.

Furthermore, a pin joint slot 158 is located proximate to the chord-wise joint 116 and oriented in chord-wise direction. The pin joint slot 158 is configured to receive corresponding second joint pin (not shown in FIG. 3). This would aid is further securely coupling the tip blade segment 104 to the root blade segment 102.

In some embodiments, the tip blade segment 104 is coupled to the root blade segment 102 before transportation. In another embodiment, the tip blade segment 104 and the root blade segment 102 may be transported separately and joined at the site of installation. In such embodiments, the tip blade segment 104 and the root blade segment 102 may be coupled to one another by inserting the first joint pin 152 into the receiving section 150 on-site. Subsequently, in some embodiments, the tip blade segment 104 is permanently joined to the root blade segment 102 at the chord-wise joint 116. Specifically, an adhesive (glue) or lamination may be employed to permanently couple the tip blade segment 104 with the root blade segment 102. Accordingly, a jointed wind turbine blade 10 with a pre-bend is obtained. The number of pin joint slots and the first and second joint pins may vary in different embodiments.

According to aspects of the present specification, a jointed wind turbine blade with a pre-bend and a method of manufacture of such a jointed wind turbine blade is disclosed. In accordance with aspects of the present specification, the pre-bend in the wind turbine blade is shaped by having an angled beam structure instead of physically shaping a pre-bend in the shells of the wind turbine. Since the wind turbine blade shells are devoid of pre-bends, infusion process in the wind turbine blades would be relatively easier. Also, the number of infusion machines that need to be employed may be reduced per shell.

Furthermore, since the moulds no longer need to have pre-bend to form a pre-bend in the wind turbine blade shell, structure of the mould may be simpler, lighter, and will be relatively cheaper. In one example, the mould may have reduced turning height and hence, the height of the wind blade manufacturing facility may also be lesser. Additionally, since the moulds do not have pre-bend, the infusion across the shell may be uniform thereby contributing to lesser defects and repairs. The proposed system and method may find application in blades of varying length and may be preferred in blades which are substantially longer, such as the 107 meter blade.

While the invention has been described with reference to exemplary embodiments, it will be understood by those skilled in the art that various changes may be made without departing from the scope of the invention. In addition, many modifications may be made to adapt a particular situation or material to the teachings of the invention without departing from the scope thereof.

## Claims

1. A wind turbine blade (10), comprising:
a tip blade segment (104) and a root blade segment (102) extending in opposite directions from a chord-wise joint (116), wherein each of the tip blade segment (104) and the root blade segment (102) comprises a pressure side shell member and a suction side shell member;
a beam structure (111) comprises:
a first section (112), wherein the first section (112) is configured to be received at a receiving section of the root blade segment (102); and
a second section (114) disposed in the tip blade segment (104) and extending at an angle with respect to the first section (112), such that at least a portion of the tip blade segment (104) is disposed outwardly with respect to a blade axis, wherein the beam structure connects the tip blade segment (104) and the root blade segment (102), such that the tip blade segment (104) and the root blade segment (102) are disposed in a fixed relative angle to each other, disregarding the deflection of the blade during operation.

2. The wind turbine blade according to any of the preceding claims, further comprising one or more first joint pins (152) located at a first end of the first section (112) for operatively coupling with the receiving section of the root blade segment (102).

3. The wind turbine blade according to any of the preceding claims, further comprising one or more pin joint slots located proximate to the chord-wise joint (116) and oriented in chord-wise direction.

4. The wind turbine blade according to any of the preceding claims, wherein the one or more pin joint slots are configured to receive corresponding second joint pins.

5. The wind turbine blade according to any of the preceding claims, wherein the first and second joint pins comprise a bolt, a pin, a bush, or combinations thereof.

6. The wind turbine blade according to any of the preceding claims, wherein at least a portion of the tip blade segment (104) is disposed outwardly in a curved manner with respect to a blade axis.

7. The wind turbine blade according to any of the preceding claims, wherein the beam structure (111) is made of a composite material.

8. The wind turbine blade according to any of the preceding claims, wherein the beam structure (111) is manufactured using additive manufacturing technique.

9. The wind turbine blade according to any of the preceding claims, wherein the composite material comprises at least one of carbon fibre, aramid fibre, and fibreglass.

10. The wind turbine blade according to any of the preceding claims, further comprising an internal support structure, wherein the beam structure (111) forms a portion of the internal support structure.

11. A wind turbine comprising a hub and at least one wind turbine blade according to any of preceding claims, wherein the at least one wind turbine blade is configured to be coupled to the hub, extending outwards from the hub and then extending outwardly with respect to the blade axis in a curved manner.

12. A method of manufacturing a wind turbine blade, according to any of the claims 1-10, comprising:
arranging a tip blade segment (104) and a root blade segment (102) in opposite directions from a chord-wise joint (116), wherein each of the tip blade segment (104) and the root blade segment (102) comprises a pressure side shell member and a suction side shell member;
inserting a first section (112) of a beam structure (111) into a receiving section of the root blade segment (102), wherein a second section (114) of a beam structure (111) is disposed inside the tip blade segment (104) and extending at an angle with respect to the first section (112), such that at least a portion of the tip blade segment (104) is disposed outwardly with respect to a blade axis,
wherein the beam structure connects the tip blade segment (104) and the root blade segment (102), such that the tip blade segment (104) and the root blade segment (102) are disposed in a fixed relative angle to each other, disregarding the deflection of the blade during operation.

13. The method of manufacturing a wind turbine blade according to any of the preceding claims, further comprising operatively coupling first end of the first section (112) with the receiving section of the root blade segment (102) using one or more first joint pins.

## Patentansprüche

1. Windkraftanlagenflügel (10), umfassend:
ein Flügelspitzensegment (104) und ein Flügelwurzelsegment (102), die sich in entgegengesetzten Richtungen von einer in Sehnenrichtung verlaufenden Verbindungsstelle (116) erstrecken, wobei das Flügelspitzensegment (104) und das Flügelwurzelsegment (102) jeweils ein druckseitiges Schalenelement und ein saugseitiges Schalenelement umfassen;
eine Balkenstruktur (111), umfassend:
einen ersten Abschnitt (112), wobei der erste Abschnitt (112) dazu konfiguriert ist, an einem Aufnahmeabschnitt des Flügelwurzelsegments (102) aufgenommen zu werden; und
einen zweiten Abschnitt (114), der in dem Flügelspitzensegment (104) angeordnet ist und sich in Bezug auf den ersten Abschnitt (112) derart unter einem Winkel erstreckt, dass mindestens ein Teil des Flügelspitzensegments (104) in Bezug auf eine Flügelachse auswärts angeordnet ist,
wobei die Balkenstruktur das Flügelspitzensegment (104) und das Flügelwurzelsegment (102) derart verbindet, dass das Flügelspitzensegment (104) und das Flügelwurzelsegment (102) ungeachtet der Auslenkung des Flügels während des Betriebs unter einem festen relativen Winkel zueinander angeordnet sind.

2. Windkraftanlagenflügel nach einem der vorangehenden Ansprüche, ferner umfassend einen oder mehrere erste Verbindungszapfen (152), die sich an einem ersten Ende des ersten Abschnitts (112) befinden, zum wirksamen Koppeln mit dem Aufnahmeabschnitt des Flügelwurzelsegments (102).

3. Windkraftanlagenflügel nach einem der vorangehenden Ansprüche, ferner umfassend ein oder mehrere Zapfenverbindungslöcher, die sich nahe der in Sehnenrichtung verlaufenden Verbindungsstelle (116) befinden und in Sehnenrichtung orientiert sind.

4. Windkraftanlagenflügel nach einem der vorangehenden Ansprüche, wobei das eine oder die mehreren Zapfenverbindungslöcher dazu konfiguriert sind, entsprechende zweite Verbindungszapfen aufzunehmen.

5. Windkraftanlagenflügel nach einem der vorangehenden Ansprüche, wobei der erste und der zweite Verbindungszapfen einen Bolzen, einen Stift, eine Buchse oder Kombinationen davon umfassen.

6. Windkraftanlagenflügel nach einem der vorangehenden Ansprüche, wobei mindestens ein Teil des Flügelspitzensegments (104) in Bezug auf eine Flügelachse auf gekrümmte Weise auswärts angeordnet ist.

7. Windkraftanlagenflügel nach einem der vorangehenden Ansprüche, wobei die Balkenstruktur (111) aus einem Verbundmaterial gebildet ist.

8. Windkraftanlagenflügel nach einem der vorangehenden Ansprüche, wobei die Balkenstruktur (111) unter Verwendung einer additiven Herstellungsmethode hergestellt ist.

9. Windkraftanlagenflügel nach einem der vorangehenden Ansprüche, wobei das Verbundmaterial mindestens eines von Kohlenstofffasern, Aramidfasern und Glasfasern umfasst.

10. Windkraftanlagenflügel nach einem der vorangehenden Ansprüche, ferner umfassend eine inwendige Stützstruktur, wobei die Balkenstruktur (111) einen Teil der inwendigen Stützstruktur bildet.

11. Windkraftanlage, umfassend eine Nabe und mindestens einen Windkraftanlagenflügel nach einem der vorangehenden Ansprüche, wobei der mindestens eine Windkraftanlagenflügel dazu konfiguriert ist, an die Nabe gekoppelt zu werden, sodass er sich von der Nabe nach außen erstreckt und sich dann in Bezug auf die Flügelachse auf gekrümmte Weise auswärts erstreckt.

12. Verfahren zum Herstellen eines Windkraftanlagenflügels nach einem der Ansprüche 1-10, umfassend:
Anordnen eines Flügelspitzensegments (104) und eines Flügelwurzelsegments (102) in entgegengesetzten Richtungen von einer in Sehnenrichtung verlaufenden Verbindungsstelle (116), wobei das Flügelspitzensegment (104) und das Flügelwurzelsegment (102) jeweils ein druckseitiges Schalenelement und ein saugseitiges Schalenelement aufweisen;
Einstecken eines ersten Abschnitts (112) einer Balkenstruktur (111) in einen Aufnahmeabschnitt des Flügelwurzelsegments (102), wobei ein zweiter Abschnitt (114) einer Balkenstruktur (111) innerhalb des Flügelspitzensegments (104) angeordnet ist und sich in Bezug auf den ersten Abschnitt (112) derart unter einem Winkel erstreckt, dass mindestens ein Teil des Flügelspitzensegments (104) in Bezug auf eine Flügelachse auswärts angeordnet ist,
wobei die Balkenstruktur das Flügelspitzensegment (104) und das Flügelwurzelsegment (102) derart verbindet, dass das Flügelspitzensegment (104) und das Flügelwurzelsegment (102) ungeachtet der Auslenkung des Flügels während des Betriebs unter einem festen relativen Winkel zueinander angeordnet sind.

13. Verfahren zum Herstellen eines Windkraftanlagenflügels nach einem der vorangehenden Ansprüche, ferner umfassend das wirksame Koppeln eines ersten Endes des ersten Abschnitt (112) mit dem Aufnahmeabschnitt des Flügelwurzelsegments (102) unter Verwendung eines oder mehrerer erster Verbindungszapfen.

## Revendications

1. Pale d'éolienne (10), comportant :
un segment de pale côté bout (104) et un segment de pale côté pied (102) s'étendant dans des directions opposées depuis un joint allant dans le sens de la corde (116), dans laquelle chacun parmi le segment de pale côté bout (104) et le segment de pale côté pied (102) comporte un élément formant coque côté en pression et un élément formant coque côté en dépression ;
une structure de poutre (111) comportant :
une première section (112), dans laquelle la première section (112) est configurée pour être reçue au niveau d'une section de réception du segment de pale côté pied (102) ; et
une deuxième section (114) disposée dans le segment de pale côté bout (104) et s'étendant selon un angle par rapport à la première section (112), de telle sorte qu'au moins une partie du segment de pale côté bout (104) est disposée vers l'extérieur par rapport à un axe de pale,
dans laquelle la structure de poutre relie le segment de pale côté bout (104) et le segment de pale côté pied (102), de telle sorte que le segment de pale côté bout (104) et le segment de pale côté pied (102) sont disposés selon un angle relatif fixe l'un par rapport à l'autre, indépendamment de la déviation de la pale lors de l'utilisation.

2. Pale d'éolienne selon l'une quelconque des revendications précédentes, comportant par ailleurs une ou plusieurs premières broches d'articulation (152) situées au niveau d'une première extrémité de la première section (112) à des fins d'accouplement fonctionnel à la section de réception du segment de pale côté pied (102).

3. Pale d'éolienne selon l'une quelconque des revendications précédentes, comportant par ailleurs une ou plusieurs fentes d'articulation à broche situées à proximité du joint allant dans le sens de la corde (116) et orientées dans la direction allant dans le sens de la corde.

4. Pale d'éolienne selon l'une quelconque des revendications précédentes, dans laquelle lesdites une ou plusieurs fentes d'articulation à broche sont configurées pour recevoir des deuxièmes broches d'articulation correspondantes.

5. Pale d'éolienne selon l'une quelconque des revendications précédentes, dans laquelle les première et deuxième broches d'articulation comportent un boulon, une broche, une douille ou des combinaisons de ceux-ci.

6. Pale d'éolienne selon l'une quelconque des revendications précédentes, dans laquelle au moins une partie du segment de pale côté bout (104) est disposée vers l'extérieur d'une manière incurvée par rapport à un axe de pale.

7. Pale d'éolienne selon l'une quelconque des revendications précédentes, dans laquelle la structure de poutre (111) est réalisée à partir d'un matériau composite.

8. Pale d'éolienne selon l'une quelconque des revendications précédentes, dans laquelle la structure de poutre (111) est fabriquée au moyen d'une technique de fabrication additive.

9. Pale d'éolienne selon l'une quelconque des revendications précédentes, dans laquelle le matériau composite comporte au moins l'une parmi de la fibre de carbone, de la fibre d'aramide et de la fibre de verre.

10. Pale d'éolienne selon l'une quelconque des revendications précédentes, comportant par ailleurs une structure de support interne, dans laquelle la structure de poutre (111) forme une partie de la structure de support interne.

11. Éolienne comportant un moyeu et au moins une pale d'éolienne selon l'une quelconque des revendications précédentes, dans laquelle ladite au moins une pale d'éolienne est configurée pour être accouplée au moyeu, s'étendant vers l'extérieur à partir du moyeu et s'étendant ensuite vers l'extérieur par rapport à l'axe de pale d'une manière incurvée.

12. Procédé de fabrication d'une pale d'éolienne selon l'une quelconque des revendications 1 à 10, comportant les étapes consistant à :
agencer un segment de pale côté bout (104) et un segment de pale côté pied (102) dans des directions opposées par rapport à un joint allant dans le sens de la corde (116), dans lequel chacun parmi le segment de pale côté bout (104) et le segment de pale côté pied (102) comporte un élément formant coque côté en pression et un élément formant coque côté en dépression ;
insérer une première section (112) d'une structure de poutre (111) dans une section de réception du segment de pale côté pied (102), dans lequel une deuxième section (114) d'une structure de poutre (111) est disposée à l'intérieur du segment de pale côté bout (104) et s'étendant selon un angle par rapport à la première section (112), de telle sorte qu'au moins une partie du segment de pale côté bout (104) est disposée vers l'extérieur par rapport à un axe de pale,
dans lequel la structure de poutre relie le segment de pale côté bout (104) et le segment de pale côté pied (102), de telle sorte que le segment de pale côté bout (104) et le segment de pale côté pied (102) sont disposés selon un angle relatif fixe l'un par rapport à l'autre, indépendamment de la déviation de la pale lors de l'utilisation.

13. Procédé de fabrication d'une pale d'éolienne selon l'une quelconque des revendications précédentes, comportant par ailleurs l'étape consistant à accoupler fonctionnellement la première extrémité de la première section (112) à la section de réception du segment de pale côté pied (102) en utilisant une ou plusieurs premières broches d'articulation.
